# EUROPEAN PATENT APPLICATION

(11) **EP 1 640 624 A1**
(43) Date of publication of application: **29.03.2006**
(21) Application number: 04745988.8
(22) Date of filing: 16.06.2004
(51) Int. Cl.: F16C 13/00, B29D 31/00, D21G 1/02

(54) **PROCESS FOR PRODUCING RESIN ROLL**

(30) Priority: 02.07.2003 JP 2003189992
(71) Applicant: YAMAUCHI CORPORATION, Hirakata-shi, Osaka 573-1132 (JP)
(72) Inventor: WATANABE, Atsuo; c/o Yamauchi Corporation, Hirakata-shi, Osaka;5731132 (JP); NAKAYAMA, Kenjiro; c/o Yamauchi Corporation, Hirakata-shi, Osaka;5731132 (JP); MURAKAMI, Tetsuya; c/o Yamauchi Corporation, Hirakata-shi, Osaka;5731132 (JP)
(74) Representative: Hoffmann, Jörg Peter
(86) International application number: PCT/JP2004/008447
(87) International publication number: WO 2005/003576

(57) **Abstract**

A resin roll (1) comprises a lower winding layer (3) comprising a fiber-reinforced resin formed on an outer periphery of a roll core (2), and an outer sleeve (5) comprising a synthetic resin formed on the outside through an adhesive layer (4). A non-woven fiber aggregate layer (8) which constitutes an outer periphery of the lower winding layer (3) is formed such that a tape-shaped non-woven fiber aggregate in which a fiber material mainly comprising inorganic fibers is coupled with a binder is sequentially transferred and the non-woven fiber aggregate is impregnated with a liquid thermosetting resin and wound around the outer periphery of the roll core (2).

## Description

### TECHNICAL FIELD

The present invention relates to a manufacturing method of a resin roll used in various kinds of industries such as paper making, iron making, a film and a fiber, and more particularly, to a manufacturing method of a large resin roll which is used as a paper making calender roll, a paper making press roll, a fiber calender roll, a calender roll for manufacturing a magnetic recording medium and the like and can withstand high loading.

### BACKGROUND ART

A resin roll used in the above usage has a constitution in which a lower winding layer comprising a fiber-reinforced resin is formed on an outer periphery of a roll core and an outer sleeve comprising a synthetic resin is formed on the outer periphery of the lower winding layer, in general. A manufacturing method of such resin roll is disclosed in Japanese Unexamined Patent Publication No. 1-260092 (patent document 1), for example.

According to the Japanese Unexamined Patent Publication No. 1-260092, the manufacturing method of the resin roll comprises a step of forming a fiber-reinforced lower winding layer by winding a fiber material impregnated with a thermosetting resin around an outer periphery of a metallic roll core, a step of separately forming an outer-layer sleeve by pouring a thermosetting synthetic resin raw material into a cylinder mold having a predetermined size and curing it at a predetermined temperature, and a step of bonding and integrating the lower winding layer and the sleeve with an adhesive layer in such a manner that the roll core having the fiber-reinforced lower winding layer is fitted in the outer-layer sleeve and an adhesive having low viscosity is poured into an annular gap between the lower winding layer and the sleeve and cured at a predetermined temperature.

According to the Japanese Unexamined Patent Publication No. 1-260092, since the manufacturing method is especially suitable for manufacturing a large and hard resin roll, and the resin roll has an excellent compressive strength and its surface is not easily damaged, the manufacturing method has a good track record as a manufacturing method for a paper making calender roll and the like.

In the above document, a thread, a roving, a cloth tape and the like comprising inorganic fibers or organic fibers are described and it is also described that the above and a non-woven fabric comprising organic fibers or inorganic fibers can be used together.

In general, as the manufacturing method of the resin roll, besides the above method in which the outer-layer sleeve is previously formed and the roll core comprising the lower winding layer is fit in the sleeve and the adhesive is poured into the gap between the lower winding layer and the sleeve to bond and integrate them as disclosed in the Japanese Unexamined Patent Publication No. 1-260092, there is another well-known method in which a roll core comprising a lower winding layer is put in a mold and a liquid resin for an outer layer is poured directly on an outer periphery of the lower winding layer without an adhesive and cured. The same material is used for the lower winding layer in either method.

As the fiber for the lower winding layer of the resin roll which is large and can withstand high loading, a thread, a roving or a cloth tape having tensile strength in the length direction is used in general because it has to be wound with constant tensile force. However, when the outer periphery of the lower winding layer is formed of the thread, the roving or the cloth tape, the outer periphery of the lower winding layer is not uniform. Thus, when the resin roll is used under high loading, a crack is likely to be generated in the outer sleeve or the adhesive layer from the fiber of the thread, the roving or the cloth tape in the surface of the lower winding layer. Therefore, it is preferable that at least the outer periphery of the lower winding layer is formed of a non-woven fabric.

In the Japanese Unexamined Patent Publication No. 1-260092, the non-woven fabric comprising the organic fibers or the inorganic fibers is described as a fiber material which forms the lower winding layer. When the organic fiber is compared with the inorganic fiber, it is preferable that the inorganic fiber is used in view of strength against the high loading. However, according to the non-woven fabric comprising the inorganic fibers, since its flexibility is low as compared with the non-woven fabric comprising the organic fibers and the fiber is likely to become loose by the tensile force, it is very difficult to wind it around the roll core. Thus, the non-woven fabric comprising the organic fibers is used for the outer periphery of the lower winding layer as it stands. For example, in the case of the paper making calender roll, linear pressure loading of 200kN/m to 400kN/m is applied. When it is used under such high loading, the resin roll in which the non-woven fabric comprising the organic fibers is used on the outer periphery of the lower winding layer could be damaged at an interface between the lower winding layer and the outer sleeve or the adhesive layer.

### DISCLOSURE OF THE INVENTION

It is an object of the present invention to provide a manufacturing method of a resin roll which can withstand high loading and is not likely to be damaged due to a damage of an interface between a lower winding layer and an outer sleeve or an adhesive layer.

The manufacturing method of the resin roll according to the present invention is such that a lower winding layer comprising a fiber-reinforced resin is formed on an outer periphery of a roll core and an outer sleeve comprising a synthetic resin is formed directly on an outer periphery of the lower winding layer or formed thereon through an adhesive layer, and it is characterized by a method of forming the lower winding layer.

That is, the manufacturing method of the resin roll according to the present invention comprises a step of forming the lower winding layer comprising the fiber-reinforced resin on the outer periphery of the roll core, a step of forming the outer sleeve comprising the synthetic resin on the outer periphery of the lower winding layer, in which the step of forming the lower winding layer comprises a step of transferring a tape-shaped non-woven fiber aggregate in which a fiber material mainly comprising inorganic fibers is coupled with a binder in a predetermined direction so as to be wound around the outer periphery of the roll core, and a step of impregnating the non-woven fiber aggregate with a liquid thermosetting resin while the non-woven fiber aggregate is being transferred.

According to the above method, since at least the outer periphery of the lower winding layer has a structure in which the fiber material mainly comprising inorganic fibers is uniformly diffused in the thermosetting resin, it does not contain a non-uniformity element which causes the roll to be destroyed. In addition, since the inorganic fiber is superior in strength as compared with the organic fiber, so that even when it is used under high loading, the roll can be prevented from being destroyed due to destruction or a crack at the interface with the outer sleeve or the adhesive layer. Furthermore, since the fiber material is coupled with the binder, although the inorganic fiber is used, the non-woven fiber aggregate has sufficient tensile strength when it is wound around the outer periphery of the roll core. Thus, the winding of the non-woven fiber aggregate becomes easy.

The lower winding layer may be a monolayer structure or a multilayer structure. According to one embodiment, the lower winding layer has a multilayer structure comprising an inner layer and an outer layer. In this case, the step of forming the lower winding layer comprises a step of forming the inner layer of the lower winding layer on the outer periphery of the roll core, and a step of forming the outer layer on the inner layer on the roll core. According to this embodiment, the outer layer is the non-woven fiber aggregate impregnated with the thermosetting resin.

According to one embodiment, the inner layer comprises a layer in which a thread, a roving or a cloth tape formed of inorganic fibers or organic fibers is impregnated with a liquid thermosetting resin and wound around the roll core. In this case, only one of the thread, the roving or the cloth tape may be used or two or more of them may be used. In this case also, at least outer periphery of the lower winding layer comprises a layer in which the non-woven fiber aggregate mainly comprising the inorganic fibers is impregnated with the thermosetting resin. According to a preferable constitution of the lower winding layer, a combination of the multilayer is such that the roving, the cloth tape and the non-woven fiber aggregate are laminated in this order from the surface of the roll core in view of strength of the resin roll against the high loading.

More preferably, the thread, the roving, and the cloth tape are all formed of glass fibers. In addition, other than the glass fiber, a carbon fiber, a metal fiber and the like as the inorganic fiber, and a polyamide fiber, an aromatic polyamide fiber, a polyimide fiber, a polyester fiber, a phenol fiber, an acrylic fiber and the like as the organic fiber may be used for the thread, the roving or the cloth tape.

The inorganic fiber constituting the non-woven fiber aggregate may include a glass fiber, a carbon fiber, a ceramic fiber, a metal fiber and the like. Among them, the glass fiber is preferably used in view of costs and strength and the like. As the inorganic fiber, one kind of fiber is used in general, but two or more kinds of fibers may be mixed and used. In addition, although the non-woven fiber aggregate comprises only the inorganic fiber in general, an organic fiber such as polyamide or polyester may be mixed to the inorganic fiber.

It is preferable that the non-woven fiber aggregate does not contain a non-uniformity element such as reinforced thread or compulsive tangles of the fibers due to a needle punch at all. In this sense, it is preferable that a non-woven fabric or paper formed of a fiber material may be used in the non-woven fiber aggregate. In addition, according to the non-woven fiber aggregate formed of the fiber material, since the fibers are hardly oriented in the vertical direction and they are oriented in the surface direction almost at random, the outer periphery of the lower winding layer is uniform and the crack caused from the fibers constituting the lower winding layer can be almost completely prevented from being generated at the interface with the outer sleeve or the adhesive layer.

Although the kind of the binder which couples the fiber material of the non-woven fiber aggregate is not particularly limited, it is an epoxy resin, polyvinyl alcohol and the like in general. Particularly, when the thermosetting resin material with which the non-woven fiber aggregate is impregnated and the binder for the fiber material comprise the same kind, excellent strength can be provided without damaging a property of the lower winding layer. Thus, it is preferable that both thermosetting resin material and the binder are the epoxy resin material.

The tape-shaped non-woven fiber aggregate in which the fiber material mainly comprising the inorganic fibers is coupled by the binder preferably has a length-direction tensile strength of 50N/15mm or more. When the non-woven fiber aggregate has the length-direction tensile strength of 50N/15mm or more, the tape of the non-woven fiber aggregate has sufficient tensile strength while it is wound around the outer periphery of the roll core. Thus, the winding operation becomes easy. Meanwhile, when the length-direction tensile strength of the tap e of the non-woven fiber aggregate is lower than the above, the fibers constituting the tape become loose or the tape is likely to be cut into strips because of tensile force when it is wound around the outer periphery of the roll core, so that the winding operation becomes difficult.

In addition, it is preferable that the non-woven fiber aggregated has a basic weight of 30g/m² to 100g/m². When the basic weight is less than 30g/m², the strength of the tape of the non-woven fiber aggregate becomes small, and the tape could be cut into strips by the tensile force when it is wound around the outer periphery of the roll core. In addition, when the basic weight of the non-woven fiber aggregate is small, since a thickness of the tape is thin, it is necessary to increase the number of windings to provide a predetermined thickness of the lower winding layer, which is troublesome. Meanwhile, when the basic weight of the non-woven fiber aggregate is more than 100g/m², the thickness of the lower winding layer could become uneven and it is difficult to form the uniform lower winding layer, so that the strength of the resin roll could be lowered.

The thermosetting resin with which the non-woven fiber aggregate is impregnated includes an epoxy resin, a polyester resin, a polyimide resin, a urethane resin and the like. Among them, the epoxy resin is preferable. When the epoxy resin is used as the thermosetting resin with which the non-woven fiber aggregate is impregnated, the lower winding layer has excellent durability against the high loading.

Furthermore, it is preferable that an inorganic filler is mixed to the thermosetting resin with which the non-woven fiber aggregate is impregnated. When the inorganic filler is mixed, the strength of the lower winding layer is further improved and the strength of the resin roll is improved also.

The inorganic filler mixed to the thermosetting resin with which the non-woven fiber aggregate constituting the lower winding layer is impregnated includes powder, beads, short fibers or whiskers of silica, quartz, glass, clay, calcium carbonate, carbon, ceramics and the like. Only one kind may be used or two or more kinds may be mixed and used for the inorganic filler. Among them, silica powder is preferably used in view of property improvement such as compressed strength and its cost. Especially, when the inorganic fiber is the glass fiber and the inorganic filler is the silica powder, the lower winding layer and the resin roll has excellent strength.

Preferably, the step of forming the lower winding layer comprises a step of lowering viscosity of the thermosetting resin material after the non-woven fiber aggregate is impregnated with the liquid thermosetting resin. The viscosity of the thermosetting resin may be lowered while the non-woven fiber aggregate is being transferred or while the non-woven fiber aggregate is being wound around the roll core. Alternatively, the viscosity of the thermosetting resin may be lowered at both positions while it is transferred and while it is wound around.

When the non-woven fiber aggregate is not sufficiently impregnated with the thermosetting resin and the non-woven fiber aggregate contains air, the roll could be destroyed at the interface between the lower winding layer and the outer sleeve or the adhesive layer while the resin roll is used under the high loading. Thus, when the viscosity of the thermosetting resin with which the non-woven fiber aggregate is impregnated is lowered as described above, flow of the thermosetting resin material is promoted. Thus, the non-woven fiber aggregate can be impregnated with resin more efficiently, so that the air can be expelled, while the resin penetrates fibers of the non-woven fiber aggregate.

Especially, according to the present invention, since the non-woven fiber aggregate is provided such that the fiber material mainly comprising the inorganic fibers is coupled with the binder, it has sufficient tensile strength when it is wound around the outer periphery of the roll core. Thus, with synergistic interaction between fastening force at the time of winding and fluidization of the thermosetting resin because of lowering of the viscosity, the air can be efficiently expelled from the non-woven fiber aggregate and the non-woven fiber aggregate can be fully impregnated with the thermosetting resin. As a result, the manufactured resin roll has sufficient strength under the high loading.

Means for lowering the viscosity of the thermosetting resin with which the non-woven fiber aggregate is impregnated includes a method of heating the non-woven fiber aggregate. The non-woven fiber aggregate can be heated by a hot-air apparatus or a heater. In addition, the viscosity of the thermosetting resin may be lowered by a method other than heating method.

When the viscosity of the thermosetting resin is lowered by the heating, if the reaction of the thermosetting material progresses before the winding of the non-woven fiber aggregate around the outer periphery of the roll core is completed, the air cannot to be expelled from the non-woven fiber aggregate. Thus, it is preferable that the temperature is lowered immediately after the non-woven fiber aggregate is impregnated with the liquid thermosetting resin material at high temperature. In this respect, it is preferable that the heating means, that is, the heating apparatus is locally set at least at one position when the non-woven fiber aggregate is transported or when the non-woven fiber aggregate is wound around the roll core, and the non-woven fiber aggregate impregnated with the liquid thermosetting resin is heated instantaneously when it passes through the heating apparatus. Since the inorganic fiber which constitutes the non-woven fiber aggregate has heat resistance as compared with the organic fiber, it is not damaged even when it is heated by the heating means.

Preferably, the viscosity of the thermosetting resin material with which the non-woven fiber aggregate is impregnated is lowered a plurality of times or at a plurality of positions. Thus, the air can be expelled from the non-woven fiber aggregate more effectively and the non-woven fiber aggregate can be sufficiently impregnated with the thermosetting resin.

In addition, the outer sleeve may be formed on the lower winding layer through an adhesive layer or the outer sleeve may be formed directly on the lower winding layer without the adhesive layer.

### BRIEF DESCRIPTION OF DRAWINGS

Fig. 1 is a longitudinal sectional view showing a resin roll according to the present invention;
Fig. 2 is a transverse sectional view showing the resin roll according to the present invention; and
Fig. 3 is a conceptual view to explain a method of forming a non-woven fiber aggregate layer of the resin roll according to the present invention.

### BEST MODE FOR CARRYING OUT THE INVENTION

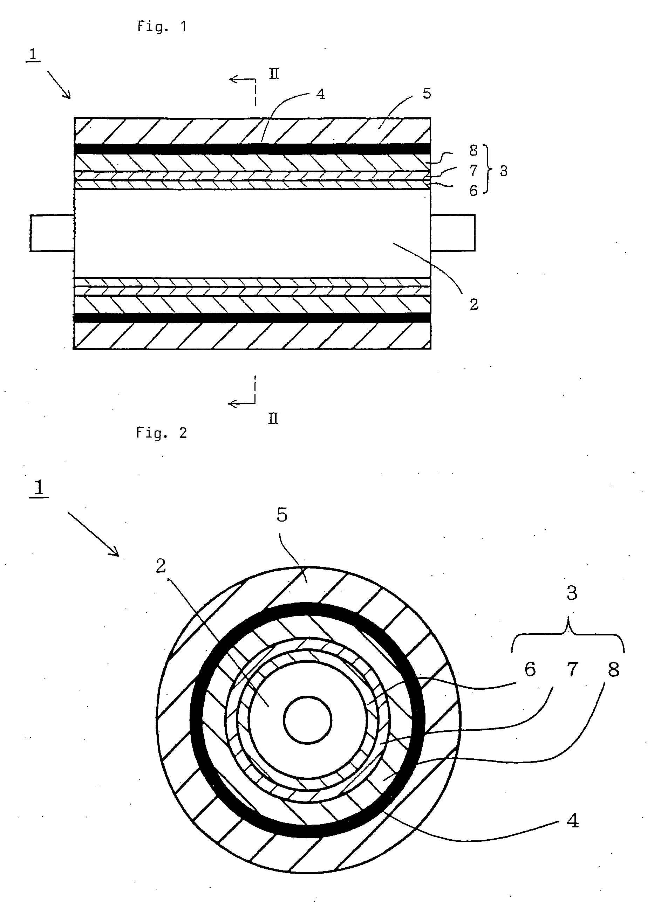

An embodiment of the present invention will be described with reference to the drawings hereinafter. Figs. 1 and 2 are sectional views showing a resin roll manufactured by a method of the present invention. The resin roll 1 comprises a lower winding layer 3 formed of a fiber-reinforced resin on an outer periphery of a roll core 2 and an outer sleeve 5 formed of a synthetic resin on its outer periphery through an adhesive layer 4. The lower winding layer 3 comprises a glass roving layer 6 impregnated with a thermosetting resin, a glass cloth layer 7 impregnated with a thermosetting resin, and a non-woven fiber aggregate layer 8 impregnated with a thermosetting resin which are laminated from the side of the roll core 2 in this order.

The resin roll 1 may be manufactured as follows.

First, an outer periphery of the iron roll core 2 having a length of 5200mm and a diameter of 480mm is roughened by sandblasting and a glass roving impregnated with a liquid epoxy resin to which 20% by weight of silica powder is mixed is wound around the outer periphery of the roll core to form the glass roving layer 6 having a thickness of 1mm. Then, similarly, a glass cloth tape impregnated with a liquid epoxy resin to which 20% by weight of silica powder is mixed is wound around the outer periphery of the glass roving layer 6 to form the glass cloth layer 7 having a thickness of 2mm.

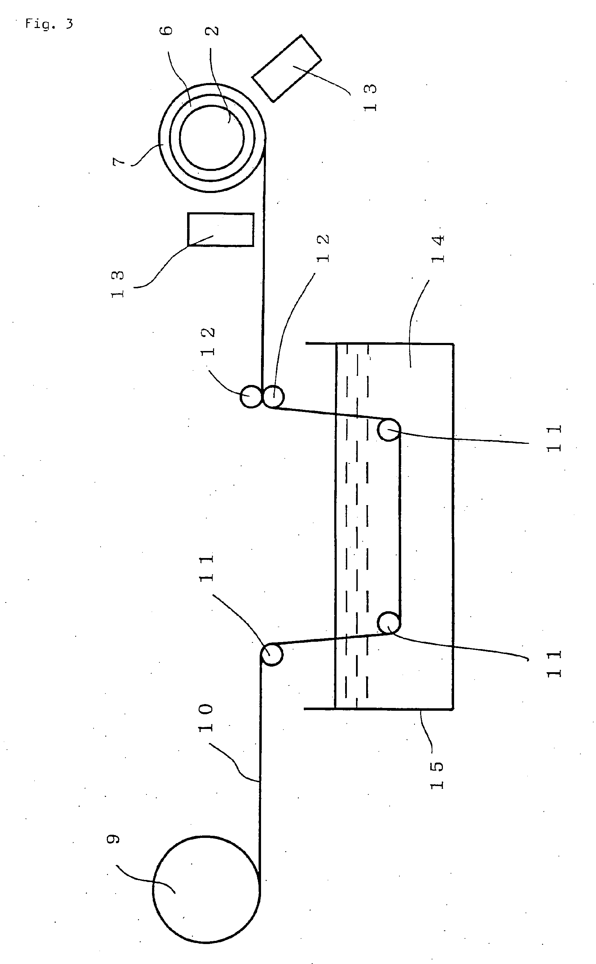

Then, glass paper 10 (SYS-041 produced by ORIBEST CO., LTD.) in which glass fibers are coupled with an epoxy resin binder is impregnated with a liquid epoxy resin 14 to which 20% by weight of silica powder is mixed like the above and this is wound around the periphery of the glass cloth layer 7 to form the non-woven fiber aggregate layer 8 having a thickness of 3.5mm by a method shown in Fig. 3.

The glass paper 10 used in this example has a length-direction tensile strength of 63.7N/15mm, a basic weight of 40.7g/m², a width of 50mm and a thickness of 0.34mm.

As shown in Fig. 3, the glass paper 10 is sequentially rolled out from a scroll 9 and that glass paper 10 passes through a tension bar 11 and it is soaked in the liquid epoxy resin 14 to which the silica powder is mixed in a resin bath 15.

An amount of the liquid epoxy resin 14 with which the glass paper 10 is impregnated in the resin bath 15 is adjusted by two squeeze bars 12 and the glass paper 10 is wound around the glass cloth layer 7 on the outer side of the roll core 2 which is rotated at a predetermined speed.

At this time, the glass paper 10 is heated at about 600°C by a heater 13 such as a hot-air processing machine at two positions just before it is wound around the roll core and while it is being wound around the roll core. Thus, viscosity of the liquid epoxy resin 14 with which the glass paper 10 is impregnated is instantaneously lowered so that the glass paper 10 is fully impregnated with the liquid epoxy resin 14 and air is removed from the glass paper 10. Here, as shown in Fig. 3, it is preferable that the glass paper 10 is heated from its front and back sides. Thus, the viscosity of the liquid resin can be efficiently lowered. The moment it is heated, the viscosity of the liquid epoxy resin becomes 300mPa·s to 1000mPa·s.

Then, the liquid epoxy resin is cured at 110°C and the lower winding layer 3 comprising the glass roving layer 6, the glass cloth layer 7 and the non-woven fiber aggregate layer 8 is formed on the outer periphery of the roll core 2.

Separately, after an liquid epoxy resin to which the silica powder has been mixed is poured in a cylinder mold having a predetermined size and cured at 170 to 180°C, its inner diameter and outer diameter are processed to make the outer sleeve 5 having an outer diameter of 540mm, an inner diameter 501mm and a length of 5300mm.

The roll core 2 on which the lower winding layer is formed is fitted in the outer sleeve 5. Then, an adhesive comprising an epoxy resin is poured in an annular gap formed between the lower winding layer 3 and the outer sleeve 5 and the adhesive is cured at 80°C so that the roll core 2 on which the lower winding layer 3 is formed and the outer sleeve 5 are bonded to be integrated through the adhesive layer 4 having a thickness of 4mm. Then, the outer periphery of the roll is cut and ground to complete the resin roll having a length of 5200mm and a diameter of 530mm.

In addition, according to the above method, the outer sleeve 5 is separately formed and the roll core 2 comprising the lower winding layer 3 is fit in the outer sleeve 5, and the adhesive is poured into the gap between the lower winding layer 3 and the outer sleeve 5 to bond and integrate them. Other than the above method, a resin roll may be manufactured such that a roll core 2 comprising a lower winding layer 3 similarly is put in a roll mold and a liquid resin for an outer layer is directly poured to the outer periphery of the lower winding layer 3 without the adhesive layer 3 and cured.

Since the resin manufactured by the method according to the present invention can withstand a linear pressure of 200kN/m to 400kN/m, it can be appropriately used under high loading.

### INDUSTRIAL APPLICABILITY

The present invention can be applied to the manufacturing method of the resin roll which is large and can withstand high loading, and especially it can be advantageously applied to a paper making calender roll, a paper making press roll, a fiber calender roll, a calender roll for manufacturing a magnetic recording medium and the like.

## Claims

1. A manufacturing method of a resin roll comprising:
a step of forming a lower winding layer comprising a fiber-reinforced resin on an outer periphery of a roll core;
a step of forming an outer sleeve comprising a synthetic resin on an outer periphery of said lower winding layer, wherein said step of forming the lower winding layer comprises a step of transferring a tape-shaped non-woven fiber aggregate in which a fiber material mainly comprising inorganic fibers is coupled with a binder in a predetermined direction so as to be wound around the outer periphery of said roll core, and a step of impregnating said non-woven fiber aggregate with a liquid thermosetting resin while said non-woven fiber aggregate is being transferred.

2. The manufacturing method of the resin roll according to claim 1, wherein said lower winding layer has a laminated structure comprising an inner layer and an outer layer, wherein
said step of forming the lower winding layer comprises:
a step of forming said inner layer of the lower winding layer on the outer periphery of said roll core, and
a step of forming said outer layer on said inner layer on said roll core, and
said outer layer is said non-woven fiber aggregate impregnated with the thermosetting resin.

3. The manufacturing method of the resin roll according to claim 2, wherein said inner layer comprises a layer in which a thread, a roving or a cloth tape comprising inorganic fibers or organic fibers is impregnated with a liquid thermosetting resin and wound around said roll core.

4. The manufacturing method of the resin roll according to any one of claims 1 to 3, wherein said step of forming the lower winding layer comprises a step of lowering viscosity of the thermosetting resin material after said non-woven fiber aggregate is impregnated with said liquid thermosetting resin.

5. The manufacturing method of the resin roll according to claim 4, wherein the viscosity of said thermosetting resin is lowered while said non-woven fiber aggregate is being transferred.

6. The manufacturing method of the resin roll according to claim 4, wherein the viscosity of said thermosetting resin is lowered while said non-woven fiber aggregate is being wound around said roll core.

7. The manufacturing method of the resin roll according to any one of claims 1 to 6, wherein said fiber material comprises glass fibers.

8. The manufacturing method of the resin roll according to any one of claims 1 to 7, wherein said non-woven fiber aggregate is a non-woven fabric or a paper formed of said fiber material.

9. The manufacturing method of the resin roll according to any one of claims 1 to 8, wherein said non-woven fiber aggregate has a length-direction tensile strength of 50N/15mm or more.

10. The manufacturing method of the resin roll according to any one of claims 1 to 9, wherein said non-woven fiber aggregate has a basic weight of 30g/m² to 100g/m².

11. The manufacturing method of the resin roll according to any one of claims 1 to 10, wherein an inorganic filler is mixed to said thermosetting resin.

12. The manufacturing method of the resin roll according to any one of claims 1 to 11, wherein said outer sleeve is formed on said lower winding layer through an adhesive layer.

13. The manufacturing method of the resin roll according to any one of claims 1 to 11, wherein said outer sleeve is formed directly on said lower winding layer without an adhesive layer.
